(19) Europäisches Patentamt
European Patent Office
Office européen des brevets

(11) **EP 2 817 878 B1**

(12) **EUROPEAN PATENT SPECIFICATION**

(45) Date of publication and mention
of the grant of the patent:
**03.08.2022 Bulletin 2022/31**

(21) Application number: **13709501.4**

(22) Date of filing: **15.02.2013**

(51) International Patent Classification (IPC):
**H02P 6/185** (2016.01)     **H02P 6/18** (2016.01)
**H02P 6/20** (2016.01)

(52) Cooperative Patent Classification (CPC):
**H02P 6/187; H02P 6/185; H02P 6/20**

(86) International application number:
**PCT/GB2013/050369**

(87) International publication number:
**WO 2013/124631 (29.08.2013 Gazette 2013/35)**

(54) **IMPROVEMENTS IN OR RELATING TO ROTOR POSITION DETECTION**

VERBESSERUNGEN AN ODER IM ZUSAMMENHANG MIT DER ERKENNUNG EINER
ROTORPOSITION

AMÉLIORATIONS DANS OU EN RAPPORT À UNE DÉTECTION DE POSITION DE ROTOR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2012 GB 201203209**

(43) Date of publication of application:
**31.12.2014 Bulletin 2015/01**

(73) Proprietor: **Stored Energy Technology Limited
Derby, Derbyshire DE24 8AQ (GB)**

(72) Inventors:
• **BROWNSON, Andrew
Derby
Derbyshire DE24 8AQ (GB)**
• **GIBSON, David
Derby
Derbyshire DE24 8AQ (GB)**

(74) Representative: **Swindell & Pearson Limited
48 Friar Gate
Derby DE1 1GY (GB)**

(56) References cited:
**WO-A2-2009/136381     US-A1- 2010 066 284**

**Description**

The present invention relates to a method and arrangement of rotor position detection for a permanent magnet synchronous motor.

Rotor position detection forms part of the control regime for permanent magnet synchronous motors. A permanent magnet synchronous motor will have a rotor of permanent magnets, which turns either within or around the stator, and stator windings to which excitation voltages are applied to create magnetic interaction with the permanent magnets and cause the rotor to be driven. The excitation voltages may be pulse-width modulated (PWM) voltages, in which case, current is controlled by changing the modulation. This creates torque on the rotor.

In the examples to be described, the motors exhibit "saliency". That is, the inductance of the stator windings varies with rotor angle.

Control of this type of motor is relatively easy when the motor is running at sufficient speed to create measurable back EMFs in the windings, but control at zero and low speed is less easy.

WO 2009/136381 discloses a control system for an AC electric motor which comprises a rotor and a stator and a plurality of phase windings connected in a star formation, each winding having one end connected to a common neutral point and another end arranged to have a terminal voltage applied to it. The control system comprises switching means arranged to control the terminal voltages applied to the windings and control means arranged to control the switching means so as to switch it between a plurality of states in each of a sequence of PWM periods. The control means is further arranged to measure the voltage at the neutral point at sample times within the PWM periods and to generate from the measured voltages an estimation of the rotational position of the rotor.

US 2010/0066284 discloses a position sensorless drive method capable of driving a permanent magnet motor by an ideal sine-wave current and enabling the driving from an extremely low-speed range in the vicinity of zero-speed is provided. A neutral-point potential of the permanent magnet motor is detected in synchronization with a PWM waveform of an inverter. The position of a rotor of the permanent magnet motor is estimated from the variation of the neutral-point potential. Since the neutral-point potential is varied in accordance with the magnetic circuit characteristics of an individual permanent magnet motor, the position can be detected regardless of the presence of saliency of the permanent magnet motor.

The present invention is as set out in the independent claims.

Examples of the present disclosure provide a method of rotor position detection for a permanent magnet synchronous motor, the motor having a rotor, a stator and a plurality of stator windings which exhibit saliency, the stator windings being connected from a common point to respective feed points to form respective phases for the motor, wherein:

each phase is driven by a PWM excitation voltage derived from a supply voltage and applied to the corresponding feed point;

the excitation voltages of the phases have PWM waveforms which are staggered in time to create combinations of excitation states in the phases, the combinations changing with time;

measurements of the supply voltage and the voltage at the common point, are taken at a plurality of times corresponding with respective combinations of excitation states;

a plurality of values of ratios are determined, wherein each one of the of the plurality of values of ratios is defined as a ratio of the measured voltage at the common point to the measured supply voltage for each one of the plurality of times corresponding with respective combinations of excitation states;

and position information for the rotor is derived from a comparison of the values of the plurality of ratios with one another, wherein the comparison is used to identify a range of positions within which the rotor position is contained.

The method may include discriminating between the two 180° electrical ranges.

Ratios of voltage at the common point to the supply voltage may be used to derive the rotor position, the ratios being compared to identify a range of positions within which the rotor position is contained. Some of the ratios may be measured, the other ratios being calculated from these measurements. The motor may have three phases. The ratios may be measured for three different excitation states or alternatively, the ratios may be measured for two different excitation states, and a ratio for a third excitation state calculated therefrom.

Within a three phase system, voltage measurements may be taken from the common point when two phase feed points are at the supply voltage and the third is at ground potential or one phase feed point is at supply voltage and the other two at ground potential. Measurement of the supply voltage may also be taken from the common point when all phase feed points are at the supply voltage.

The PWM modulation may be applied in such a manner as to create at least two required excitation states in each PWM cycle, each required excitation state having a pair of stator windings in parallel and a different third stator winding in series with the pair, the voltage measurements being taken within the duration of the required excitation states. The phase waveforms may be substantially equally staggered in time. Alternatively, the phase waveforms may be unequally staggered in time.

In another aspect, examples of the present disclosure provide an arrangement for rotor position detection in a permanent magnet synchronous motor, the motor having a rotor, a stator and a plurality of stator windings which exhibit saliency, and the stator windings being connected from a common point to respective feed points to form respective phases for the motor, wherein the arrangement comprises:

a drive arrangement operable to provide PWM excitation voltages to each of the feed points to drive the corresponding phase;

the drive arrangement providing excitation voltages for the phases having PWM waveforms which are staggered in time to create combinations of excitation states in the phases, the combinations changing with time;

a measurement arrangement operable to measure the supply voltage and the voltage at the common point at a plurality of times corresponding with respective combinations of excitation states;

the arrangement being operable to determine a plurality of values of ratios, wherein each one of the plurality of values of ratios is defined as a ratio of the measured voltage at the common point to the measured supply voltage for each one of the plurality of times corresponding with respective combinations of excitation states;

and the arrangement being operable to derive position information for the rotor from a comparison of the values of the plurality of ratios with one another, wherein the comparison is used to identify a range of positions within which the rotor position is contained.

The arrangement may discriminate between the two 180° electrical ranges.

Ratios of voltage at the common point to the supply voltage may be used to derive the rotor position, the ratios being compared to identify a range of positions within which the rotor position is contained. Some of the ratios may be measured, the other ratios being calculated from these measurements. The motor may have three phases. The ratios may be measured for three different excitation states or alternatively, the ratios may be measured for two different excitation states, and a ratio for a third excitation state calculated therefrom.

Within a three phase system, voltage measurements may be taken from the common point when two phase feed points are at the supply voltage and the third is at ground potential or one phase feed point is at supply voltage and the other two at ground potential. Measurement of the supply voltage may also be taken from the common point when all phase feed points are at the supply voltage.

The PWM modulation may be applied in such a manner as to create at least two required excitation states in each PWM cycle, each required excitation state having a pair of stator windings in parallel and a different third stator winding in series with the pair, the voltage measurements being taken within the duration of the required excitation states. The phase waveforms may be substantially equally staggered in time. Alternatively, the phase waveforms may be unequally staggered in time.

Examples of the present invention will now be described in more detail, by way of example only, and with reference to the accompanying drawings, in which:

Fig. 1 is a highly schematic diagram of a permanent magnet synchronous motor of the type with which the present invention may be implemented;

Fig. 2 is a circuit diagram of a control arrangement for the motor of Fig. 1;

Fig. 3 shows the voltage waveforms (not according to the invention and is present for illustration purposes only) which may be used within the motor of Fig. 1;

Fig. 4 shows voltage waveforms in accordance with a first example of the present invention;

Fig. 5a, b, c, d, e, f are equivalent circuits representing the stator windings corresponding to the excitation states yielding the ratios p, q, r, $\underline{p}$, $\underline{q}$ and r shown in Fig. 4;

Fig. 6 illustrates examples of possible voltage ratios corresponding to some of the equivalent circuits of Fig. 5, at various rotor positions;

Fig. 7a, b, c shows voltage waveforms in accordance with a second example of the present invention; and

Fig. 8a, b are equivalent circuits representing the stator windings at different times within the waveform of Fig. 7a.

Structure and control arrangements

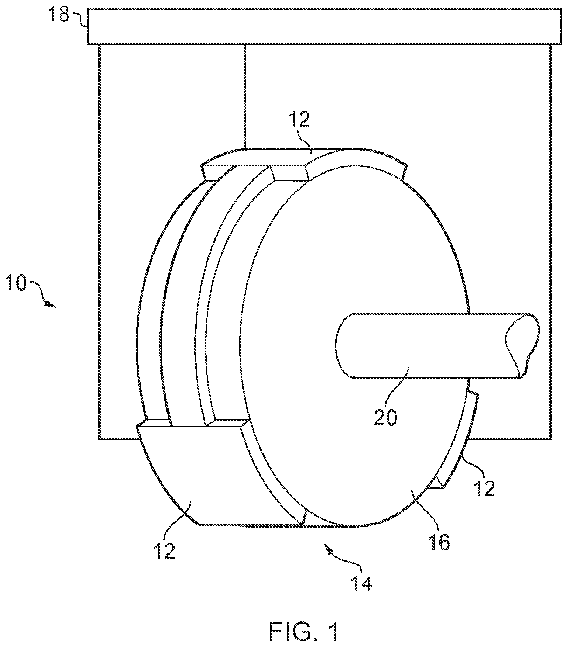

Figure 1 illustrates an electrical machine which is a permanent magnet synchronous motor 10. The motor 10 includes a plurality of phase windings 12. In this example, the phase windings 12 are arranged to form a stator 14 and are therefore also called stator windings. A rotor 16 of permanent magnets is rotatable relative to the phase windings 12. Drive current for the phase windings 12 is provided from a drive source 18. Drive current in the phase windings 12 creates torque to turn the member 16, relative to the windings 12. This creates torque on the output shaft 20 of the motor 10.

The stator windings 12 have inductances which vary with the angle of the rotor 16. This inductance variation is known as "saliency".

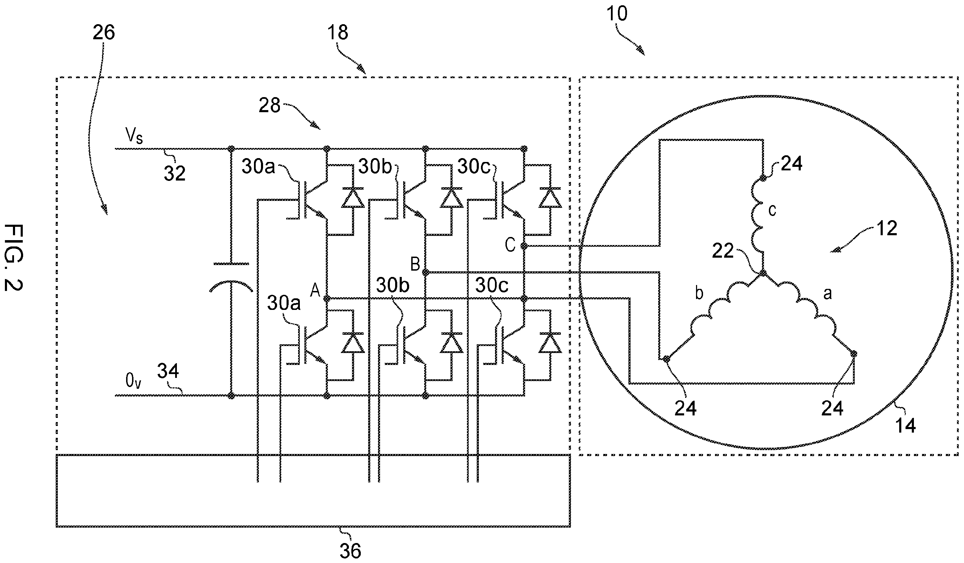

Control arrangements for providing drive current to the windings 12 are provided by the drive source 18 (Fig. 2). In Fig. 2, the windings 12 are shown connected from a common point 22 to respective feed points 24. Each winding 12 can therefore be fed with drive current as a different phase of the motor 10. In this example, the motor 10 is a three phase motor having three windings 12 (labelled a, b and c) fed from three separate feed points 24, and connected at the common point 22. The rotor 16 is not shown in Fig. 2.

Drive current is provided to the feed points 24 from a DC supply 26, by means of a switching circuit 28. The switching circuit 28 includes three pairs of power switching devices 30a, b, c, such as power transistors. The devices of each pair of devices 30 are connected in series across the supply 26. The voltage applied to the respective feed point 24 is taken from the connection between the pair of devices 30. Accordingly, in one switching condition, the corresponding feed point is connected to the supply voltage at 32 by switching on one of the devices 30. In the other condition, the corresponding feed point is connected to ground at 34 by switching on the other of the devices 30. The condition of the devices 30 is controlled by a control circuit 36.

For each pair of devices 30, the control circuit 36 will not switch both on simultaneously. This would short the DC supply 26 (a condition known as shoot through). Neither will the control circuit 36 switch both off simultaneously (except for short transition periods necessary to eliminate any risk of shoot through).

The control circuit 36 uses the devices 30 to provide PWM voltage pulses to the feed points 24, as will be described. Thus, each feed point switches between the two excitation states described above. In this description, the phases will be identified as phase A, phase B and phase C. These letters are used in upper case within the switching circuit 28 to indicate that phase being fed from that point, and in lower case to indicate the corresponding phase winding 12. In the following description, the switching state of the devices 30 is denoted as A, B and C when the output of the switching circuit 28 is at supply voltage 32 for that phase, and by A, B and C when the output of the switching circuit 28 is at ground 34 for that phase. Thus eight possible excitation state combinations exist for the circuit in Fig 2, which can be listed as:-

**(i) A,B,C**
**(ii) A,B,C**
**(iii) A,B,C**
**(iv) A,B,C**
**(v) A,B,C**
**(vi) A,B,C**
**(vii) A,B,C**
**and**
**(viii) A,B,C**

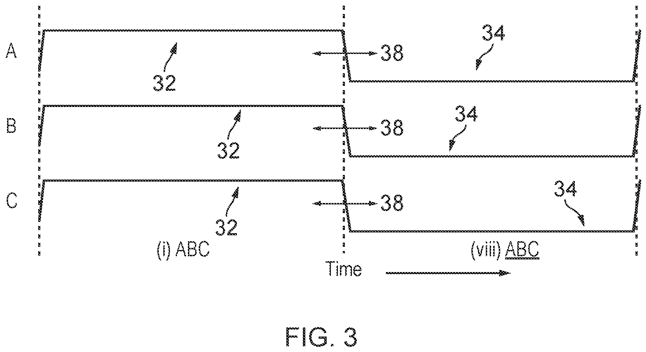

Fig. 3 illustrates a regime for drive voltages applied to the three windings 12. This is a PWM regime and does not itself form part of the present invention. In Figure 3, the pulse trains for each of the phases are illustrated, one above the other. The horizontal axis indicates time. Each phase is driven with a zero modulation PWM train of pulses having 50% mark-space ratios. The three phases are driven in phase with each other. Thus, the excitation states of the three phases alternate regularly between states (i) and (viii) as set out in the list above.

This results in no PWM carrier frequency current (ripple) in the windings 12, and hence no loss (ignoring possible small losses due to charging and discharging any capacitance associated with the windings 12). In addition, the absence of phase current will result in no torque being created within the motor 10.

In order to create torque within the motor 10, current is injected by changing the modulation. This is achieved by changing the pulse width modulation of the phases, indicated in Fig. 3 by the horizontal arrows 38, indicating that the time of the falling edge of the pulses can be moved to change the mark-space ratio. Thus, Fig. 3 indicates the use of falling edge modulation of the PWM pulse stream. Alternatively, leading edge modulation could be used, or both edges could be moved.

However, in order to effectively start the motor, and to control the motor at standstill and low speeds, it is necessary to establish the relative positions of the rotor 16 and the windings 12. Once this has been done and the motor begins to rotate, the phase modulations will have to vary to create the appropriate rotating flux pattern to continue motor rotation.

In the example implementations of the invention, now to be described, the relative positions of the rotor 16 and the windings 12 are established by control of the PWM switching sequence, and consideration of the voltage at the common point 22.

Example 1

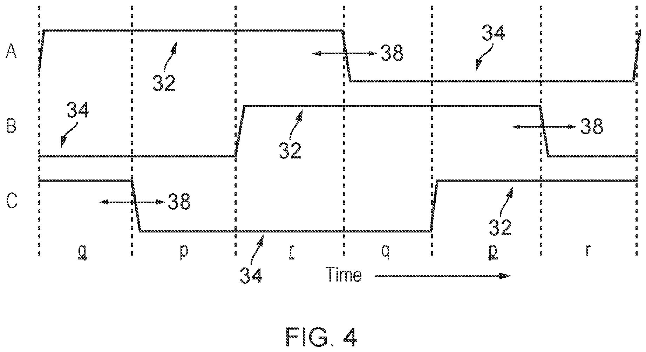

Fig. 4 illustrates a modified PWM excitation regime which is created by appropriate operation of the control circuit 36. In the regime of Fig. 4, the pulse trains of the three phases are no longer in phase. That is, they are staggered in time. In this example, the three phases are equally staggered in time. That is, phase B is delayed by one third of the total period of the switching cycle, relative to phase A. Phase C is delayed by a further one third of the total period of the switching cycle.

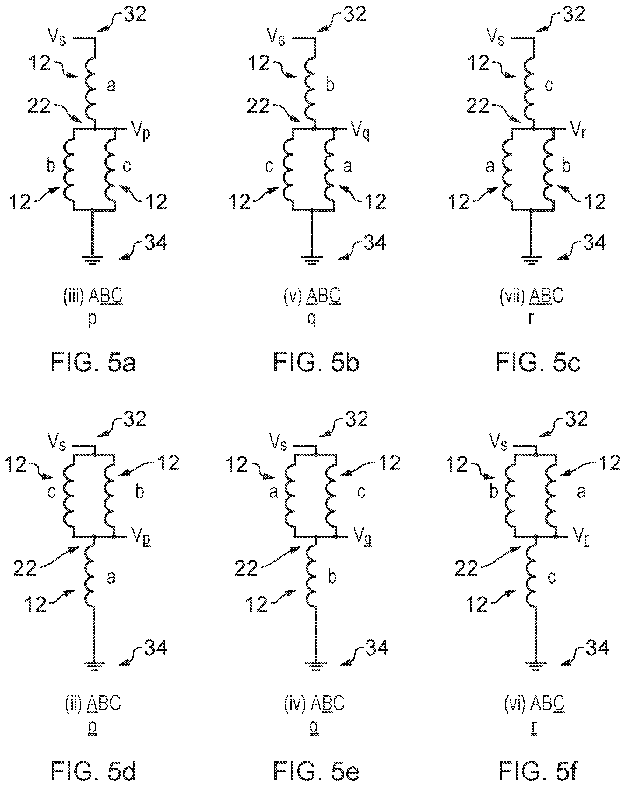

When this excitation regime is applied to the windings 12, more combinations of excitation states will occur than can occur in the regime of Fig. 3. Each of these combinations can be illustrated as an equivalent circuit by considering the common point 22, with each winding 12 being connected from the common point 22 either to the supply voltage 32, or to ground 34. Fig. 5 illustrates six such equivalent circuits, each showing a different excitation state after one of the phases has changed state, to be connected either to the supply voltage 32 or to ground 34. The excitation states changes with time, as can be seen from Fig. 4.

Transitions between the excitation states are indicated by vertical broken lines in Fig 4, and the excitation states are labeled as p, q, r, $\underline{p}$, g and r. These labels (p, q etc.) are also shown in Fig. 5, to identify the respective equivalent circuit.

A measurement at the common point may be made at any time within the regions indicated for each switching state in Fig4, with the exception of a short period following each switching transition, when ringing may be seen in the voltage at the common point

Each of the equivalent circuits of Fig. 5 is in the form of an inductive divider between the supply voltage 32 and ground 34. Within each of the equivalent circuits, the voltage at the common point 22 will be substantially the product of the supply voltage and the ratio of the inductance between the common point 22 and ground 34, to the total inductance between the supply voltage 32 and ground 34. In the equivalent circuits of Fig. 5, each has a different arrangement of phase windings 12 connected from the common point 22 to ground 34 or supply voltage 32 and accordingly, measurements from each of the equivalent circuits (at the corresponding time) will yield different values according to the ratio of each of the inductances and the total inductance. Since the value of each of the inductances depends on the rotor position (because the windings 12 exhibit saliency) the ratios recovered from the equivalent circuits of Fig. 5 will vary with the electrical angle of the rotor. These ratios, expressed as a proportion of the supply voltage, $V_s$ are:

$p=V_p/V_s$ where $V_p$ is the common point voltage measured during excitation state ABC

$q=V_q/V_s$ where $V_q$ is the common point voltage measured during excitation state ABC

$r=V_r/V_s$ where $V_r$ is the common point voltage measured during excitation state $\underline{ABC}$

$\underline{p}=V_{\underline{p}}/V_s$ where $V_{\underline{p}}$ is the common point voltage measured during excitation state ABC

$\underline{q}=V_{\underline{q}}/V_s$ where $V_{\underline{q}}$ is the common point voltage measured during excitation state ABC

$\underline{r}=V_{\underline{r}}/V_s$ where $V_{\underline{r}}$ is the common point voltage measured during excitation state ABC

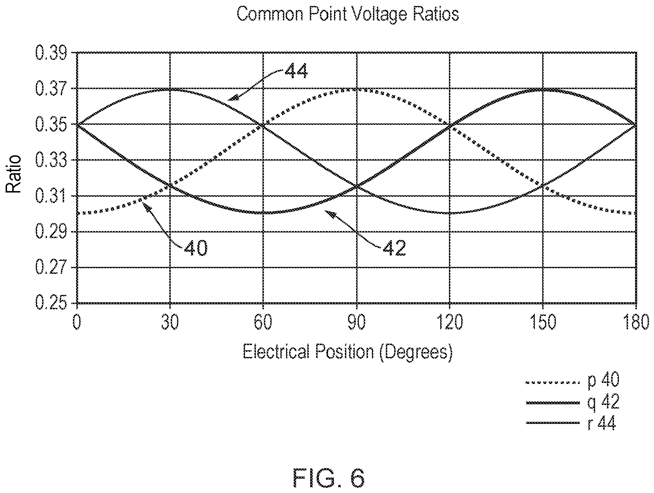

Fig. 6 indicates three ratio values, across a full 180° range of electrical angles of the rotor 16. Ratio p is shown as trace 40. Ratio q is shown as trace 42. Ratio r is shown as trace 44. It is readily apparent from Fig. 6 that once the three ratios have been measured, as described above, a comparison of the three values p, q, r will allow the electrical angle of the rotor 16 to be derived, within one of six ranges, each of 30°. (In practice, it may be beneficial to measure the ratios over several complete PWM cycles in order to minimise any noise effects). The following table sets out the various conditions which can arise from the comparison of the three values, and the corresponding range of angles which can be deduced from Fig. 6:

**TABLE 1**

| Condition | Range of angles | | | Interpolation routine |
|---|---|---|---|---|
| p<q≤r | ≥0° | to | <30° | 0°+(r-q)/(r-p)*30° |
| **OR** | ≥180° | to | <210° | 180°+(r-q)/(r-p)*30° |
| q≤p<r | ≥30° | to | <60° | 30°+(p-q)/(r-q)*30° |
| **OR** | ≥210° | to | <240° | 210°+(p-q)/(r-q)*30° |
| q<r≤p | ≥60° | to | <90° | 60°+(p-r)/(p-q)*30° |
| **OR** | ≥240° | to | <270° | 240°+(p-r)/(p-q)*30° |
| r≤q<p | ≥90° | to | <120° | 90°+(q-r)/(p-r)*30° |
| **OR** | ≥270° | to | <300° | 270°+(q-r)/(p-r)*30° |
| r<p≤q | ≥120° | to | <150° | 120°+(q-p)/(q-r)*30° |
| **OR** | ≥300° | to | <330° | 300°+(q-p)/(q-r)*30° |
| p≤r<q | ≥150° | to | <180° | 1500+(r-p)/(q-p)*30° |
| **OR** | ≥330° | to | <360° | 330°+(r-p)/(q-p)*30° |

The right-hand column of Table 1 indicates how the position can be estimated more precisely, within each 30° range, by using an interpolation routine. It is to be appreciated that the accuracy of such an interpolation will depend on the assumptions on which the interpolation is based, such as the precise form of the underlying saliency characteristic, but we expect that in many practical situations in which saliency is substantially sinusoidal, this type of interpolation can give an accuracy to within about 5° of electrical angle. Other interpolation and correction routines may be used. There may be an offset between the derived electrical angle and true electrical angle.

Given that, in each 360° cycle of electrical angle of the motor, the saliency inductance variation and thus the voltage ratios (as in Figure 6) will go through two complete cycles, then the method does not establish whether the electrical angle lies within 0°-180° or 180°-360°. Table 1 shows these pairs of possible angle ranges for each condition. A method of discriminating between these two ranges is to initially establish two possible rotor positions using the above table - i.e. θ or 180°+θ. This then identifies where the 0° or 180° axis lies. Two current pulses are then applied to the windings, such that the flux direction adds to the magnet flux for one pulse and subtracts from it for the other pulse. If these current pulses are of sufficient magnitude, the stator laminations will be driven into saturation when the flux from the permanent magnets reinforces the flux created by the current in the windings and away from saturation when the two fluxes are in opposite directions. This difference in saturation will result in a difference in inductance, which can be identified, for example, by a difference in current rise times. If the convention is adopted that when the control conditions are such that the applied flux enhances the magnet flux this denotes the 0° position and where the applied flux opposes the magnet flux this denotes the 180° position, then the true rotor position can be uniquely established.

The nature of the regime used in the first example has the following additional implications.

The evenly staggered PWM sequence produces a ripple current in the windings 12, at the PWM frequency and harmonics of that frequency. This creates resistive losses within the windings 12 and iron losses within the motor. Thus, the efficiency of the motor 10 is reduced, as compared with the regime illustrated in Fig. 3. Secondly the method described requires that ratios p, q and r all can be measured within each PWM cycle which imposes limits on the minimum stagger and the maximum stagger that can be applied. This restriction together with the need to avoid the ringing which occurs after a switching transition imposes a limit on the maximum modulation achievable.

This will limit the maximum speed achievable at full torque.

Example 2

Example 1 requires that conditions p,q,and r all occur within each PWM cycle, which imposes a limit on the maximum achievable modulation depth. This restriction can be largely overcome by making use of the relationships which will now be described, and which allow p, q, and r to be derived from just two common point measurements.

Consider the following equations:

$$p=1-\underline{p} \qquad \text{Eq (i)}$$

$$q = 1 - \underline{q} \qquad \text{Eq (ii)}$$

$$r = 1 - \underline{r} \qquad \text{Eq (iii)}$$

Equation (i) expresses the fact that $\underline{p}$ is the complement of p and similarly for equations (ii) and (iii).

A fourth equation can be derived by noting that the voltage ratios p,q and r are also the inductance ratios in the inductive dividers of the equivalent circuits (Fig. 5a,b,c)

$$p = \frac{\dfrac{L_B L_C}{L_B + L_C}}{L_A + \dfrac{L_B L_C}{L_B + L_C}} \qquad \text{Eq(v)}$$

$$q = \frac{\dfrac{L_A L_C}{L_A + L_C}}{L_B + \dfrac{L_A L_C}{L_A + L_C}} \qquad \text{Eq(vi)}$$

$$r = \frac{\dfrac{L_A L_B}{L_A + L_B}}{L_C + \dfrac{L_A L_B}{L_A + L_B}} \qquad \text{Eq(vii)}$$

where $L_A$, $L_B$ and $L_C$ are the inductances of the three stator windings of the phases, A, B and C.

Multiplying both numerator and denominator of Equations (v), (vi) and (vii) by $(L_B+L_C)$, $(L_A+L_C)$ and $(L_A+L_B)$ respectively gives:-

$$p = \frac{L_B L_C}{L_A L_B + L_B L_C + L_A L_C} \quad \text{(viii)},$$

,

$$q = \frac{L_A L_C}{L_A L_B + L_B L_C + L_A L_C} \quad \text{(ix)},$$

$$r = \frac{L_A + L_B}{L_A L_B + L_B L_C + L_A L_C} \quad \text{(x)}$$

Adding together p, q and r gives:-

Therefore

$$p + q + r = \frac{L_B L_C + L_A L_C + L_B L_C}{L_A L_B + L_B L_C + L_A L_C} = 1$$

$$p + q + r = 1 \qquad \text{Eq(iv)}$$

Thus, if any two of p, q or r are known, then the third can be calculated and rotor position can be deduced by using Table 1 above.

This analysis excludes the effects of mutual inductance which if included have been shown to cause negligible additional errors. Thus it is only necessary to make two common point measurements to generate the three ratios p,q, r required for position determination.

Noting that p and $\underline{p}$ yield effectively the same saliency dependent information, the useful combinations of measurements are those taken in any of the following conditions:

(p OR $\underline{p}$) AND (q OR $\underline{q}$) AND (r OR r)    Condition (i)
OR
(p OR $\underline{p}$) AND (q OR $\underline{q}$)    Condition (ii)
OR
(p OR $\underline{p}$) AND (r OR r)    Condition (iii)
OR
(q OR g) AND (r OR r)    Condition (iv)

These conditions can be summarized (by considering Fig. 5) in that each one requires two excitation states, and in that each required excitation state has a pair of stator windings in parallel and a different third stator winding in series with the pair. Thus, to meet one of the conditions, either of a pair of complementary states (such as p and $\underline{p}$) can be used, but not both.

Using this additional freedom, it is possible to adjust the stagger to yield one of the valid combinations at any modulation depth up to a maximum determined by the settling time of the common point voltage and the capture time of the measurement electronics. Typically this allows modulation depths of 95% to be achieved whilst still producing a valid measurement during each PWM cycle.

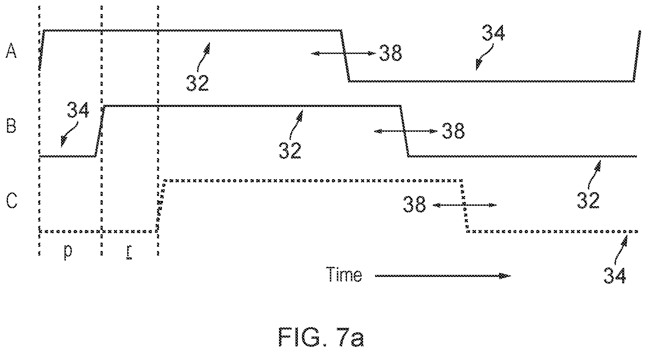

Fig. 7a illustrates how this additional freedom may be used in practice. Fig. 7a illustrates a further PWM excitation regime which is created by appropriate operation of the control circuit 36. In the regime of Fig. 7a, the pulse trains of the three phases are again not in phase. That is, they are staggered in time. Whereas the three phases were equally staggered in time in Example 1, being staggered by 33% of the total switching cycle, all three phases are not equally staggered in time in this example, as can be seen from Fig. 7a. In this example, the phases are staggered by about 10% of the total switching cycle. That is, phase B is delayed by 10% of the total period of the switching cycle, relative to phase A. Phase C is delayed by a further 10% of the total period of the switching cycle. Phase A is then delayed by 80% of the switching cycle. This stagger regime compared to the 33% equal stagger in example 1 results in reduced ripple current at low modulation depth. Fig. 7a shows the situation as might be used to detect rotor position ( prior to starting) with 0% modulation.

When this excitation regime is applied to the windings, more useful combinations of excitation states will again occur than can occur in the regime of Fig. 3. Each of these combinations can be illustrated as an equivalent circuit by considering the common point 22, and each winding 12 being connected from the common point 22 either to the supply voltage 32, or to ground 34.

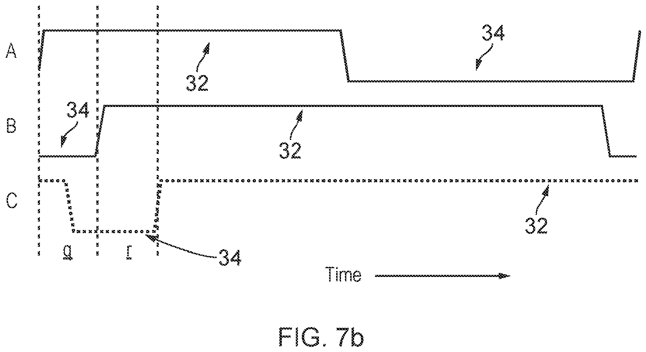

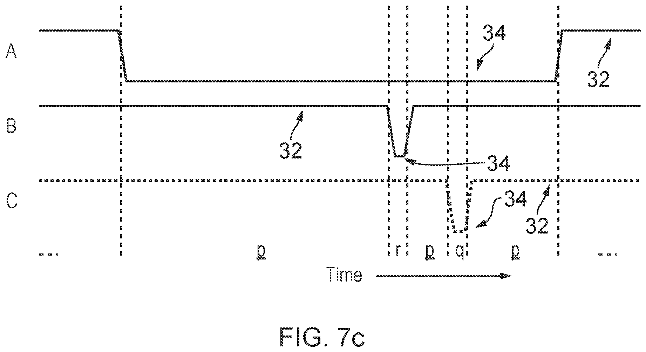

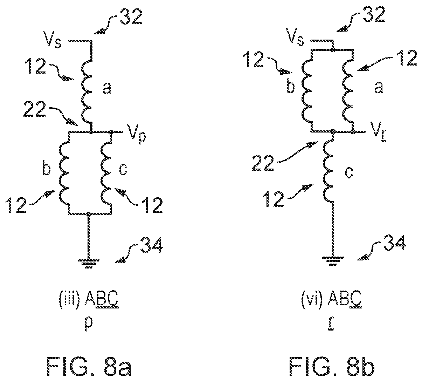

Fig. 8 illustrates two of these equivalent circuits under the switching regime of Fig 7a, taken respectively just after the first of the phases (A) has switched high (excitation state p), and just after the second of the phases (B) has switched high (excitation state $\underline{r}$). Over each PWM cycle this sequence of excitation states repeats. However, as the modulation depth increases, the situation will arise where the falling edge of one phase may encroach on the measurement window following another phase rising edge. Fig 7b shows that for an 80% modulation depth and at an applied electrical angle of 90° the excitation states following the rising edges cease to provide the ratios p and $\underline{r}$. However, it can also be seen that other valid combinations of excitation states become available (in this case $\underline{q}$ and $\underline{r}$). Thus, the method can be extended by examining the excitation state after every switching transition and extracting a valid combination matching any one of the conditions (i) to (iv) described earlier. By applying this method, modulation depths throughout the range of 0% to approx 95% can be achieved with centre modulation and a wide range of fixed stagger values. For example, fig. 7c, shows the situation at 95% modulation and a 10% stagger at an applied 120° electrical angle. This electrical angle represents the worst case condition as regards generation of suitable excitation states, where 2 phases are at maximum modulation.

When using the regime of Example 2, the relatively small stagger of the three phases, together with the ability to use centre modulation causes much less PWM frequency carrier current to arise, thereby reducing resistive and iron losses and improving the efficiency of the motor. By extending measurements to include all possible excitation states, including those introduced by higher levels of modulation and not just those after rising edges, it is possible to achieve significantly higher modulation depth - typically 95%, thus increasing the power available at start up and low speed. In particular, many different circuits could be used for creating and controlling the excitation regime applied to the phases of the motor.

**Claims**

**1.** A method of rotor (16) position detection for a permanent magnet synchronous motor (10) , the motor (10) having a rotor (16), a stator (14) and a plurality of stator windings (12) which exhibit saliency, the stator windings (12) being connected from a common point (22) to respective feed points (24) to form respective phases for the motor (10), wherein:

each phase is driven by a PWM excitation voltage derived from a supply voltage ($V_s$) and applied to the corresponding feed point (24);
the excitation voltages of the phases have PWM waveforms which are staggered in time to create combinations of excitation states in the phases, the combinations changing with time;
measurements of the supply voltage ($V_s$) and the voltage ($V_p$, $V_q$, $V_r$) at the common point (22) are taken at a plurality of times corresponding with respective combinations of excitation states;
a plurality of values of ratios (p,q,r) are determined, wherein each one of the of the plurality of values of ratios is defined as a ratio of the measured voltage at the common point ($V_p$, $V_q$, $V_r$) to the measured supply voltage ($V_s$) for each one of the plurality of times corresponding with respective combinations of excitation states;
and position information for the rotor (16) is derived from a comparison of the values of the plurality of ratios (p, q,r) with one another, wherein the comparison is used to identify a range of positions within which the rotor position is contained.

**2.** A method according to claim 1, wherein the method includes discriminating between two 180° electrical ranges.

**3.** A method according to claim 1 or 2, wherein:

the ratios (p, q, r) of the voltage at the common point ($V_p$, $V_q$, $V_r$) to the supply voltage ($V_s$) are determined for the combinations of excitation states;
one of a plurality of conditions is determined based on a comparison of the values of the ratios (p, q, r) with one another, wherein each condition is associated with a range of positions within which the rotor position is contained; and
the position information for the rotor (16) is derived from the range of positions within which the rotor position is contained that is associated with the determined condition.

**4.** A method according to any preceding claim, wherein some of the ratios (p,q) are measured, the other ratios (r) being calculated from these measurements.

**5.** A method according to any preceding claim, wherein the motor (10) has three phases and preferably:

wherein the ratios (p,q,r) are measured for three different excitation states; or
wherein the ratios (p,q) are measured for two different excitation states, and a ratio (r) for a third excitation state is calculated therefrom.

**6.** A method according to claim 5, wherein voltage measurements are taken from the common point when two phase feed points are at the supply voltage ($V_s$) and the third is at ground potential or one phase feed point is at supply voltage ($V_s$) and the other two at ground potential and preferably:
wherein measurement of the supply voltage ($V_s$) is taken from the common point when all phase feed points are at the supply voltage ($V_s$).

**7.** A method according to any of claims 5 to 6, wherein the PWM modulation is applied in such a manner as to create at least two required excitation states in each PWM cycle, each required excitation state having a pair of stator windings (12) in parallel and a different third stator winding (12) in series with the pair, the voltage measurements being taken within the duration of the required excitation states.

**8.** An arrangement for rotor position detection in a permanent magnet synchronous motor (10), the motor having a rotor (16), a stator (14) and a plurality of stator windings (12) which exhibit saliency, and the stator windings (12) being connected from a common point (22) to respective feed points (24) to form respective phases for the motor (10), wherein the arrangement comprises:

a drive arrangement (18) operable to provide PWM excitation voltages to each of the feed points (24) to drive the corresponding phase;
the drive arrangement (18) being configured to provide excitation voltages for the phases having PWM waveforms which are staggered in time to create combinations of excitation states in the phases, the combinations changing with time;
a measurement arrangement operable to measure the supply voltage ($V_s$) and the voltage ($V_p$, $V_q$, $V_r$) at the common point (22) at a plurality of times corresponding with respective combinations of excitation states;
the arrangement being operable to determine a plurality of values of ratios (p,q,r), wherein each one of the plurality of values of ratios is defined as a ratio of the measured voltage at the common point ($V_p$, $V_q$, $V_r$) to the measured supply voltage ($V_s$) for each one of the plurality of times corresponding with respective combinations of excitation states;
and the arrangement being operable to derive position information for the rotor (16) from a comparison of the values of the plurality of ratios (p,q,r) with one another, wherein the comparison is used to identify a range of positions within which the rotor position is contained.

**9.** An arrangement according to claim 8, the arrangement being operable to discriminate between two 180° electrical ranges.

**10.** An arrangement according to claim 8 or 9, wherein the arrangement is operable to:

determine the ratios (p, q, r) of the voltage at the common point ($V_p$, $V_q$, $V_r$) to the supply voltage ($V_s$) for the combinations of excitation states; and
determine one of a plurality of conditions based on a comparison of the values of the ratios (p, q, r) with one another, wherein each condition is associated with a range of positions within which the rotor position is contained; and
derive the position information for the rotor (16) from the range of positions within which the rotor position is contained that is associated with the determined condition.

**11.** An arrangement according to claim 10, wherein some of the ratios (p,q) are measured, the other ratios (r) being calculated from these measurements.

**12.** An arrangement according to any of claims 10 to 11 wherein the motor (10) has three phases and preferably

wherein the measurement arrangement is operable to measure the ratios (p,q,r) for three different excitation states; or
wherein the measurement arrangement is operable to measure the ratios (p,q) for two different excitation states, and a ratio (r) for a third excitation state is calculated therefrom.

**13.** An arrangement according to claim 12, wherein voltage measurements are taken from the common point when two phase feed points are at the supply voltage ($V_s$) and the third is at ground potential or one phase feed point is at supply voltage ($V_s$) and the other two at ground potential and preferably:
wherein measurement of the supply voltage ($V_s$) is taken from the common point when all phase feed points are at the supply voltage ($V_s$).

**14.** An arrangement according to any of claims 12 to 13, wherein the PWM modulation is applied in such a manner as to create at least two required excitation states in each PWM cycle, each required excitation state having a pair of stator windings (12) in parallel and a different third stator winding (12) in series with the pair, the voltage measurements being taken within the duration of the required excitation states.

**Patentansprüche**

1. Verfahren zur Positionserfassung eines Rotors (16) eines Permanentmagnet-Synchronmotors (10), wobei der Motor (10) den Rotor (16), einen Stator (14) und eine Vielzahl von über eine Ausprägung verfügenden Statorwicklungen (12) aufweist, wobei die Statorwicklungen (12) von einem gemeinsamen Punkt (22) aus mit jeweiligen Versorgungspunkten (24) verbunden sind, um jeweilige Phasen für den Motor (10) zu bilden, wobei:

   jede Phase durch eine von einer Versorgungsspannung (Vs) abgeleitete und an dem jeweiligen Versorgungspunkt (24) angelegte PWM-Erregerspannung angesteuert wird;
   die Erregerspannungen der zeitlich verschobenen Phasen PWM-Wellenformen aufweisen, um Kombinationen von Erregungszuständen in den Phasen zu erzeugen, wobei sich die Kombinationen mit der Zeit ändern;
   Messungen der Versorgungsspannung (Vs) und der Spannung (Vp, Vq, Vr) an dem gemeinsamen Punkt (22) zu einer Vielzahl von Zeitpunkten vorgenommen werden, die den jeweiligen Kombinationen von Erregungszuständen entsprechen;
   mehrere Werte von Verhältnissen (p, q, r) bestimmt werden, wobei jeder der mehreren Werte von Verhältnissen als ein Verhältnis der an dem gemeinsamen Punkt (Vp, Vq, Vr) gemessenen Spannung zu der für jeden der mehreren Zeitpunkte gemessenen Versorgungsspannung (Vs) entsprechend den jeweiligen Kombinationen von Erregungszuständen definiert ist; und
   Positionsinformationen für den Rotor (16) aus einem Vergleich der Werte der Vielzahl von Verhältnissen (p, q, r) untereinander abgeleitet werden, wobei der Vergleich verwendet wird, um einen Bereich von Positionen zu identifizieren, in dem die Rotorposition enthalten ist.

2. Verfahren nach Anspruch 1, **dadurch gekennzeichnet, dass** das Verfahren eine Unterscheidung zwischen zwei elektrischen 180°-Bereichen einschließt.

3. Verfahren nach Anspruch 1 oder 2, **dadurch gekennzeichnet, dass** die Verhältnisse (p, q, r) der Spannung am gemeinsamen Punkt (Vp, Vq, Vr) zur Versorgungsspannung (Vs) für die Kombinationen von Erregungszuständen ermittelt werden;

   auf der Grundlage eines Vergleichs der Werte der Verhältnisse (p, q, r) miteinander eine von mehreren Zuständen bestimmt wird, wobei jeder Zustand einem Bereich von Positionen zugeordnet ist, in dem die Rotorposition enthalten ist; und
   die Positionsinformation für den Rotor (16) aus dem Bereich von Positionen abgeleitet wird, in dem die der bestimmten Bedingung zugeordnete Rotorposition enthalten ist.

4. Verfahren nach einem der vorhergehenden Ansprüche, **dadurch gekennzeichnet, dass** einige der Verhältnisse (p, q) gemessen werden und die anderen Verhältnisse (r) aus diesen Messungen berechnet werden.

5. Verfahren nach einem der vorhergehenden Ansprüche, **dadurch gekennzeichnet, dass** der Motor (10) drei Phasen hat und vorzugsweise:

   wobei die Verhältnisse (p, q, r) für drei verschiedene Erregungszustände gemessen werden; oder
   wobei die Verhältnisse (p, q) für zwei verschiedene Erregungszustände gemessen werden und ein Verhältnis (r) für einen dritten Erregungszustand daraus berechnet wird.

6. Verfahren nach Anspruch 5, **dadurch gekennzeichnet, dass** Spannungsmessungen vom gemeinsamen Punkt aus vorgenommen werden, wenn zwei Phasenversorgungspunkte auf der Versorgungsspannung (Vs) liegen und der Dritte auf Erdpotential liegt, oder ein Phasenversorgungspunkt auf der Versorgungsspannung (Vs) und die beiden anderen auf Erdpotential liegen und vorzugsweise:

   wobei die Messung der Versorgungsspannung (Vs) vom gemeinsamen Punkt aus vorgenommen wird, wenn alle Phasenversorgungspunkte auf der Versorgungsspannung (Vs ) liegen.

7. Verfahren nach einem der Ansprüche 5 bis 6, **dadurch gekennzeichnet, dass** die PWM-Modulation so angewandt wird, dass in jedem PWM-Zyklus mindestens zwei erforderliche Erregungszustände erzeugt werden, wobei jeder erforderliche Erregungszustand ein Paar von Statorwicklungen (12) parallel und eine andere dritte Statorwicklung (12) in Reihe mit dem Paar aufweist, wobei die Spannungsmessungen innerhalb der Dauer der erforderlichen Erregungszustände vorgenommen werden.

8. Anordnung zur Rotorpositionserfassung in einem Permanentmagnet-Synchronmotor (10), wobei der Motor einen Rotor (16), einen Stator (14) und eine Vielzahl von über eine Ausprägung verfügenden Statorwicklungen (12) aufweist, und wobei die Statorwicklungen (12) von einem gemeinsamen Punkt (22) aus mit jeweiligen Versorgungspunkten (24) verbunden sind, um jeweilige Phasen für den Motor (10) zu bilden, wobei die Anordnung umfasst:

eine Ansteuerungsanordnung (18), die betreibbar ist, um PWM-Erregerspannungen für jeden der Versorgungspunkte (24) bereitzustellen, um die entsprechende Phase anzusteuern;
wobei die Ansteuerungsanordnung (18) so konfiguriert ist, dass sie Erregerspannungen für die eine PWM-Wellenformen aufweisenden, zeitlich verschoben Phasen bereitstellt, um sich mit der Zeit ändernde Kombinationen von Erregungszuständen in den Phasen zu erzeugen;
eine Messanordnung, die betreibbar ist, um die Versorgungsspannung (Vs) und die Spannung (Vp, Vq, Vr) an dem gemeinsamen Punkt (22) zu einer Vielzahl von mit jeweiligen Kombinationen von Erregungszuständen korrespondierenden Zeitpunkten zu messen;
wobei die Anordnung betreibbar ist, um eine Mehrzahl von Werten von Verhältnissen (p, q, r) zu ermitteln, wobei jeder der Mehrzahl von Werten von Verhältnissen als ein Verhältnis der gemessenen Spannung an dem gemeinsamen Punkt (Vp, Vq, Vr) zu der gemessenen Versorgungsspannung (Vs) für jeden der Mehrzahl von Zeitpunkten definiert ist, die jeweiligen Kombinationen von Erregungszuständen entsprechen; und
wobei die Anordnung in der Lage ist, Positionsinformationen für den Rotor (16) aus einem Vergleich der Werte der Vielzahl von Verhältnissen (p, q, r) miteinander abzuleiten, wobei der Vergleich verwendet wird, um einen Bereich von Positionen zu identifizieren, in dem die Rotorposition enthalten ist.

9. Anordnung nach Anspruch 8, **dadurch gekennzeichnet, dass** die Anordnung zur Unterscheidung zwischen zwei elektrischen 180°-Bereichen betreibbar ist.

10. Anordnung nach Anspruch 8 oder 9, **dadurch gekennzeichnet, dass** die Anordnung betreibbar ist, um:

Bestimmen der Verhältnisse (p, q, r) der Spannung am gemeinsamen Punkt (Vp , Vq , V r) zur Versorgungsspannung (Vs ) für die Kombinationen von Erregungszuständen; und
Bestimmen eines von mehreren Zuständen auf der Grundlage eines Vergleichs der Werte der Verhältnisse (p, q, r) miteinander, wobei jeder Zustand einem Bereich von Positionen zugeordnet ist, in dem die Rotorposition enthalten ist; und
Ableiten der Positionsinformation für den Rotor (16) aus dem Bereich von Positionen, in dem die dem bestimmten Zustand zugeordnete Rotorposition enthalten ist.

11. Anordnung nach Anspruch 10, **dadurch gekennzeichnet, dass** einige der Verhältnisse (p, q) gemessen werden und die anderen Verhältnisse (r) aus diesen Messungen berechnet werden.

12. Anordnung nach einem der Ansprüche 10 bis 11, **dadurch gekennzeichnet, dass** der Motor (10) drei Phasen aufweist und wobei die Messanordnung vorzugsweise so betreibbar ist, dass sie die Verhältnisse (p, q, r) für drei verschiedene Erregungszustände misst; oder
wobei die Messanordnung so betreibbar ist, dass sie die Verhältnisse (p, q) für zwei verschiedene Erregungszustände misst und daraus ein Verhältnis (r) für einen dritten Erregungszustand berechnet wird.

13. Anordnung nach Anspruch 12, **dadurch gekennzeichnet, dass** Spannungsmessungen vom gemeinsamen Punkt aus vorgenommen werden, wenn zwei Phasenversorgungspunkte auf der Versorgungsspannung (Vs) liegen und der Dritte auf Erdpotential liegt, oder ein Phasenversorgungspunkt auf der Versorgungsspannung (Vs) und die beiden anderen auf Erdpotential liegen und vorzugsweise:
wobei die Messung der Versorgungsspannung (Vs) vom gemeinsamen Punkt aus vorgenommen wird, wenn alle Phasenversorgungspunkte auf der Versorgungsspannung (Vs ) liegen.

14. Anordnung nach einem der Ansprüche 12 bis 13, **dadurch gekennzeichnet, dass** die PWM-Modulation so angewandt wird, dass in jedem PWM-Zyklus mindestens zwei erforderliche Erregungszustände erzeugt werden, wobei jeder erforderliche Erregungszustand ein Paar von Statorwicklungen (12) parallel und eine andere dritte Statorwicklung (12) in Reihe mit dem Paar aufweist, wobei die Spannungsmessungen innerhalb der Dauer der erforderlichen Erregungszustände vorgenommen werden.

**Revendications**

1. Procédé de détection de position de rotor (16) pour un moteur synchrone à aimants permanents (10), le moteur (10) ayant un rotor (16), un stator (14) et une pluralité d'enroulements de stator (12) qui présentent une saillance, les enroulements de stator (12) étant connectés à partir d'un point commun (22) à des points d'alimentation respectifs (24) pour former des phases respectives pour le moteur (10), dans lequel :

chaque phase est commandée par une tension d'excitation PWM dérivée d'une tension d'alimentation (Vs) et appliquée au point d'alimentation correspondant (24) ;
les tensions d'excitation des phases ont des formes d'onde PWM qui sont décalées dans le temps pour créer des combinaisons d'états d'excitation dans les phases, les combinaisons changeant avec le temps ;
des mesures de la tension d'alimentation (Vs) et de la tension (Vp, Vq, Vr) au niveau du point commun (22) sont prises à plusieurs instants correspondant à des combinaisons respectives d'états d'excitation ;
une pluralité de valeurs de rapports (p, q, r) sont déterminées, chaque valeur de la pluralité de valeurs de rapports étant définie comme un rapport de la tension mesurée au niveau du point commun (Vp, Vq, Vr) à la tension d'alimentation mesurée (Vs) pour chaque instant de la pluralité d'instants correspondant à des combinaisons respectives d'états d'excitation ;
et des informations de position pour le rotor (16) sont dérivées d'une comparaison des valeurs de la pluralité de rapports (p, q, r) entre elles, la comparaison étant utilisée pour identifier une plage de positions dans laquelle la position du rotor est contenue.

2. Procédé selon la revendication 1, dans lequel le procédé comprend la discrimination entre deux plages électriques à 180°.

3. Procédé selon la revendication 1 ou 2, dans lequel :

les rapports (p, q, r) de la tension au niveau du point commun (Vp, Vq, Vr) à la tension d'alimentation (Vs) sont déterminés pour les combinaisons d'états d'excitation ;
une condition parmi une pluralité de conditions est déterminée sur la base d'une comparaison des valeurs des rapports (p, q, r) les unes avec les autres, chaque condition étant associée à une plage de positions dans laquelle la position du rotor est contenue ; et
les informations de position pour le rotor (16) sont dérivées de la plage de positions dans laquelle la position du rotor est contenue qui est associée à la condition déterminée.

4. Procédé selon l'une quelconque des revendications précédentes, dans lequel certains des rapports (p, q) sont mesurés, les autres rapports (r) étant calculés à partir de ces mesures.

5. Procédé selon l'une quelconque des revendications précédentes, dans lequel le moteur (10) est triphasé et de préférence :

dans lequel les rapports (p, q, r) sont mesurés pour trois états d'excitation différents ; ou
dans lequel les rapports (p, q) sont mesurés pour deux états d'excitation différents, et un rapport (r) pour un troisième état d'excitation est calculé à partir de ceux-ci.

6. Procédé selon la revendication 5, dans lequel les mesures de tension sont prises à partir du point commun lorsque deux points d'alimentation de phase sont à la tension d'alimentation (Vs) et le troisième est au potentiel de la masse ou qu'un point d'alimentation de phase est à la tension d'alimentation (Vs) et les deux autres au potentiel de masse et de préférence :
dans lequel la mesure de la tension d'alimentation (Vs) est prise à partir du point commun lorsque tous les points d'alimentation de phase sont à la tension d'alimentation (Vs).

7. Procédé selon l'une quelconque des revendications 5 à 6, dans lequel la modulation de PWM est appliquée de manière à créer au moins deux états d'excitation requis dans chaque cycle de PWM, chaque état d'excitation requis ayant une paire d'enroulements de stator (12) en parallèle et un troisième enroulement de stator (12) différent en série avec la paire, les mesures de tension étant effectuées pendant la durée des états d'excitation requis.

8. Agencement pour la détection de position de rotor dans un moteur synchrone à aimants permanents (10), le moteur ayant un rotor (16), un stator (14) et une pluralité d'enroulements de stator (12) qui présentent une saillance, et les enroulements de stator (12) étant connecté à partir d'un point commun (22) à des points d'alimentation respectifs (24) pour former des phases respectives pour le moteur (10), dans lequel l'agencement comprend :

un agencement de commande (18) utilisable pour fournir des tensions d'excitation PWM à chacun des points d'alimentation (24) pour commander la phase correspondante ;

l'agencement de commande (18) étant configuré pour fournir des tensions d'excitation pour les phases ayant des formes d'onde PWM qui sont décalées dans le temps pour créer des combinaisons d'états d'excitation dans les phases, les combinaisons changeant avec le temps ;

un agencement de mesure utilisable pour mesurer la tension d'alimentation (Vs) et la tension (Vp, Vq, Vr) au niveau du point commun à une pluralité d'instants correspondant à des combinaisons respectives d'états d'excitation ;

l'agencement étant utilisable pour déterminer une pluralité de valeurs de rapports (p, q, r), dans lequel chaque valeur de la pluralité de valeurs de rapports est définie comme un rapport de la tension mesurée au niveau du point commun (Vp, Vq, Vr) à la tension d'alimentation mesurée (Vs) pour chaque instant de la pluralité d'instants correspondant à des combinaisons respectives d'états d'excitation ;

et l'agencement étant utilisable pour dériver des informations de position pour le rotor (16) à partir d'une comparaison des valeurs de la pluralité de rapports (p, q, r) les uns avec les autres, dans lequel la comparaison est utilisée pour identifier une plage de positions à l'intérieur de laquelle la position du rotor est contenue.

9. Agencement selon la revendication 8, l'agencement étant utilisable pour discriminer entre deux plages électriques à 180°.

10. Agencement selon la revendication 8 ou 9, dans lequel l'agencement peut être utilisé pour :

déterminer les rapports (p, q, r) de la tension au niveau du point commun (Vp, Vq, Vr) sur la tension d'alimentation (Vs) pour les combinaisons d'états d'excitation ; et

déterminer une condition parmi une pluralité de conditions sur la base d'une comparaison des valeurs des rapports (p, q, r) les unes avec les autres, dans lequel chaque condition est associée à une plage de positions dans laquelle la position du rotor est contenue ; et

dériver les informations de position pour le rotor (16) à partir de la plage de positions dans laquelle la position du rotor est contenue qui est associée à la condition déterminée.

11. Agencement selon la revendication 10, dans lequel certains des rapports (p, q) sont mesurés, les autres rapports (r) étant calculés à partir de ces mesures.

12. Agencement selon l'une quelconque des revendications 10 à 11, dans lequel le moteur (10) a trois phases et de préférence dans lequel l'agencement de mesure est utilisable pour mesurer les rapports (p, q, r) pour trois états d'excitation différents ; ou

dans lequel le dispositif de mesure est utilisable pour mesurer les rapports (p, q) pour deux états d'excitation différents, et un rapport (r) pour un troisième état d'excitation calculé à partir de ceux-ci.

13. Agencement selon la revendication 12, dans lequel les mesures de tension sont prises à partir du point commun lorsque deux points d'alimentation de phase sont à la tension d'alimentation (Vs) et le troisième est au potentiel de masse ou qu'un point d'alimentation de phase est à la tension d'alimentation (Vs) et les deux autres au potentiel de masse et de préférence :

dans lequel la mesure de la tension d'alimentation (Vs) est prise à partir du point commun lorsque tous les points d'alimentation de phase sont à la tension d'alimentation (Vs).

14. Agencement selon l'une quelconque des revendications 12 à 13, dans lequel la modulation de PWM est appliquée de manière à créer au moins deux états d'excitation requis dans chaque cycle de PWM, chaque état d'excitation requis ayant une paire d'enroulements de stator (12) en parallèle et un troisième enroulement de stator (12) différent en série avec la paire, les mesures de tension étant effectuées pendant la durée des états d'excitation requis.

FIG. 1

FIG. 2

16

FIG. 3

FIG. 4

(iii) A<u>B</u>C
p

FIG. 5a

(v) A<u>B</u>C
q

FIG. 5b

(vii) <u>A</u>B<u>C</u>
r

FIG. 5c

(ii) <u>A</u>B<u>C</u>
p

FIG. 5d

(iv) A<u>B</u>C
q

FIG. 5e

(vi) A<u>B</u><u>C</u>
r

FIG. 5f

## Common Point Voltage Ratios

FIG. 6

FIG. 7a

FIG. 7b

FIG. 7c

(iii) A<u>BC</u>
p

FIG. 8a

(vi) A<u>BC</u>
r

FIG. 8b

**EP 2 817 878 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009136381 A
- US 20100066284 A